# EUROPEAN PATENT APPLICATION

(11) **EP 3 588 409 A1**
(43) Date of publication of application: **01.01.2020**
(21) Application number: 19175828.3
(22) Date of filing: 22.05.2019
(51) Int. Cl.: G06Q 10/10

(54) **APPARATUS, SYSTEM, AND METHOD FOR APTITUDE MANAGEMENT**

(30) Priority: 28.06.2018 US 201816021810
(71) Applicant: StackForce Inc., Portland, OR 97204 (US)
(72) Inventor: BURLING, Nicholas H, Portland, OR Oregon 97204 (US); ESPOSITO, Patrick R., Portland, OR Oregon 97204 (US); SUICH, Christopher S., Portland, OR Oregon 97204 (US)
(74) Representative: Ruuskanen, Juha-Pekka

(57) **Abstract**

Various embodiments related to an aptitude management system for assessing and validating an aptitude assertion by a user, the system including: receive a request from a user to establish a multi-user aptitude assessment and validation group; identify candidates to join the multi-user aptitude assessment and validation group; transmit a message to identified candidates with an invitation to join a multi-user aptitude assessment and validation group; create the multi-user aptitude assessment and validation group based upon a first minimum number of candidates accepting the invitation to join; generate an aptitude assessment and validation model based upon suggestions from members of the multi-user aptitude assessment and validation group; and publish the multi-user aptitude assessment and validation model.

## Description

### TECHNICAL FIELD

This disclosure relates generally to providing apparatuses, systems, and methods for aptitude management activities.

### BACKGROUND

Globally, coundess studies have indicated that there is a worldwide "skills gap" - a gap between the capacity that employers want or need their employees or consultants to have in terms of aptitude for specific work functions, and the aptitude that those employees or consultants need to be able to perform specific work functions.

This skills gap negatively impacts enterprise performance, productivity, and the employment environment. While statistics vary by study, in some assessments, nearly two-thirds of employers have reported difficulty finding properly skilled workers and over half of employers have indicated that many of their job openings have lingered for twelve months or more.

The costs of this skills gap for companies is significant, as the average costs of searching for and recruiting workers can be 50% to 75% of annual salary for highly-skilled workers to 20% of annual salary for low-skilled workers.

Employees and prospective workers' pay a steep price, as well, as many face unemployment or underemployment due to lack of skills. Other workers face their own productivity issues due to lack of co-workers with the right capabilities. The results are negative impacts on employee morale and employee engagement. All the while, it is widely reported that the majority of workers want to learn a new skill or improve their aptitude with skills to land a better job.

### SUMMARY

A brief summary of various example embodiments is presented. Some simplifications and omissions may be made in the following summary, which is intended to highlight and introduce some aspects of the various example embodiments, but not to limit the scope of the invention.

Detailed descriptions of example embodiments adequate to allow those of ordinary skill in the art to make and use the inventive concepts will follow in later sections.

Various embodiments relate to an aptitude management system for assessing and validating an aptitude assertion by a user, the system including: receive a request from a user to establish a multi-user aptitude assessment and validation group; identify candidates to join the multi-user aptitude assessment and validation group; transmit a message to identified candidates with an invitation to join a multi-user aptitude assessment and validation group; create the multi-user aptitude assessment and validation group based upon a first minimum number of candidates accepting the invitation to join; generate an aptitude assessment and validation model based upon suggestions from members of the multi-user aptitude assessment and validation group; and publish the multi-user aptitude assessment and validation model.

Various embodiments are described, wherein the processor is further configured to: receive aptitude assertion data from a user; transmit a request to assess and validate the aptitude assertion data from the user to members of the multi-user aptitude assessment and validation group; and assess and validate the aptitude assertion data from the user by receiving assessments and validations from a second minimum number of members of the multi-user aptitude assessment and validation group.

Various embodiments are described, wherein the processor is further configured to: record the aptitude assessment and validation to a user profile, validating members of the multi-user assessment and validation group profile, and the multi-user assessment and validation group profile.

Various embodiments are described, wherein the processor is further configured to: determine the integrity of the multi-group assessment and validation of the user aptitude data.

Various embodiments are described, wherein the processor is further configured to: provide a credit to a member of the multi-user assessment and validation group profile when the multi-group assessment and validation of the user aptitude data has integrity; and provide a debit to a member of the multi-user assessment and validation group profile when the multi-group assessment and validation of the user aptitude data does not have integrity.

Various embodiments are described, wherein the processor is further configured to: receive aptitude self-assessment data from the user.

Various embodiments are described, wherein the processor is further configured to: transmit the aptitude assessment and validation to an authorized system.

Various embodiments are described, wherein the processor is further configured to: receive aptitude assertion data from a user; determine whether the user has completed a self-assessment; and transmit a request to the user to complete the self-assessment when the self-assessment is not complete.

Various embodiments are described, wherein the processor is further configured to: receive self-assessment request from a user; and provide the user a self-assessment tool for the user to perform a self-assessment.

Various embodiments are described, wherein the processor is further configured to: receive aptitude assertion data from a user; determine whether the user's aptitudes have been assessed and validated by the multi-user aptitude assessment and validation group; and transmit a request to the multi-user aptitude assessment and validation group to perform a multi-user aptitude assessment and validation of the user's aptitudes that have not been assessed and validated by the multi-user aptitude assessment and validation group.

Various embodiments are described, wherein the processor is further configured to: receive a work opportunity from another user of the aptitude management system; extract required aptitude information from the work opportunity; generate comparison data by comparing the required aptitude information with the aptitudes in a profile of the user; and transmit the comparison data to the other user.

Various embodiments are described, wherein the comparison data includes gap data indicating required aptitudes not included in the user's profile.

Various embodiments are described, wherein the processor is further configured to: receive a work opportunity from another user of the aptitude management system; extract required aptitude information from the work opportunity; generate comparison data by comparing the required aptitude information with the aptitudes in a profile of the user; and transmit the comparison data to the user.

Various embodiments are described, wherein the comparison data includes gap data indicating required aptitudes not included in the user's profile.

Various embodiments are described, wherein the processor is further configured to: compare the gap data to aptitude enhancement opportunity data; and generate aptitude enhancement opportunities for the user; and transmit to the user the enhancement opportunities for the user.

Various embodiments are described, wherein the processor is further configured to: compare aptitudes in a user's profile against the aptitudes in a plurality of work opportunities; generate gap data indicating work opportunity aptitudes not included in the user's profile; compare the gap data to aptitude enhancement opportunity data; generate aptitude enhancement opportunities for the user; and transmit the gap data and enhancement opportunities for the user to the user.

### BRIEF DESCRIPTION OF THE DRAWINGS

The accompanying figures, where like reference numerals refer to identical or functionally similar elements throughout the separate views, together with the detailed description below, are incorporated in and form part of the specification, and serve to further illustrate example embodiments of concepts found in the claims, and explain various principles and advantages of those embodiments.

These and other more detailed and specific features are more fully disclosed in the following specification, reference being had to the accompanying drawings, in which:
FIG. 1 illustrates an embodiment of an aptitude management system and process;
FIG. 2 illustrates a flow chart of a method for user aptitude assertion;
FIG. 3 illustrates a flow chart of a method of validating a user;
FIG. 4 illustrates a flow chart for a method of developing a multi-user aptitude assessment and validation model;
FIG. 5 illustrates a flow chart for a method of multi-mode user aptitude assessment and validation;
FIG. 6 illustrates a flow chart for a method of user aptitude attribution;
FIG. 7 illustrates a flow chart for a method of matching a work opportunity to a user;
FIG. 8 illustrates a flow chart for a method of enhancing user aptitudes;
FIG. 9 illustrates an embodiment of a user computing system for use in embodiments of the aptitude management system; and
FIG. 10 illustrates an embodiment of a server computing system for use in embodiments of the aptitude management system.

### DETAILED DESCRIPTION

It should be understood that the figures are merely schematic and are not drawn to scale. It should also be understood that the same reference numerals are used throughout the figures to indicate the same or similar parts.

The descriptions and drawings illustrate the principles of various example embodiments. It will thus be appreciated that those skilled in the art will be able to devise various arrangements that, although not explicitly described or shown herein, embody the principles of the invention and are included within its scope. Furthermore, all examples recited herein are principally intended expressly to be for pedagogical purposes to aid the reader in understanding the principles of the invention and the concepts contributed by the inventor to furthering the art and are to be construed as being without limitation to such specifically recited examples and conditions. Additionally, the term, "or," as used herein, refers to a non-exclusive or (i.e., and/or), unless otherwise indicated (e.g., "or else" or "or in the alternative"). Also, the various embodiments described herein are not necessarily mutually exclusive, as some embodiments can be combined with one or more other embodiments to form new embodiments. Descriptors such as "first," "second," "third," etc., are not meant to limit the order of elements discussed, are used to distinguish one element from the next, and are generally interchangeable.

While job websites, business social networking websites, and online training services can help to address skills gap issues mentioned above, these software platforms have not yet made an impact on these difficulties that enterprises and workers face due to their lack of functionality.

Thus, there is a need for apparatuses, systems, and methods for aptitude management activities that allow for user aptitude assertion, multi-user aptitude assessment and validation model development, multi-mode user aptitude assessment and validation, user aptitude attribution, work opportunity matching, and user aptitude enhancement.

Any reference in the specification to "one embodiment," "a certain embodiment," or any other reference to an embodiment is intended to indicate that a particular feature, structure, or characteristics described in connection with the embodiment is included in at least one embodiment and may be utilized in other embodiments as well. Moreover, the appearances of such terms in various places in the specification are not necessarily all referring to the same embodiment.

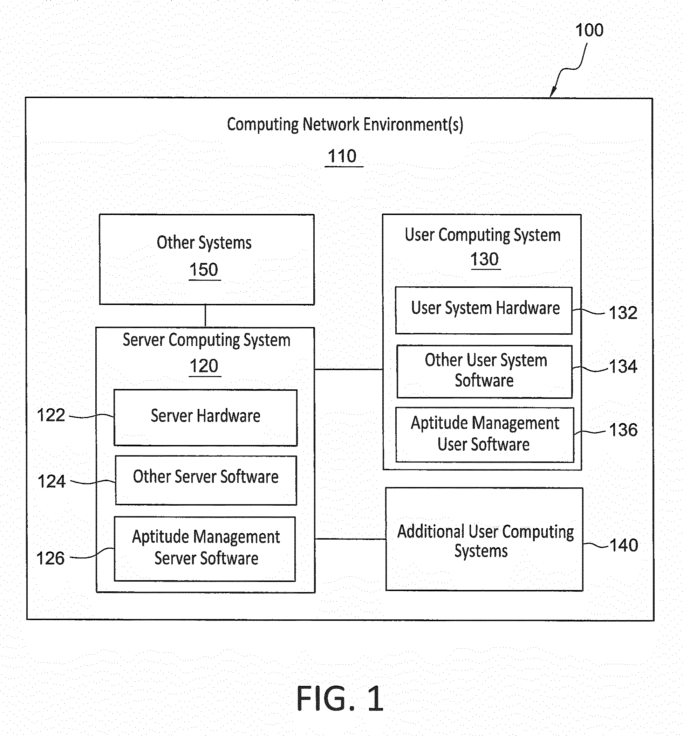

FIG. 1 illustrates an embodiment of an aptitude management system and method 100 that includes: computing network environment(s) 110; a server computing system 120; server hardware 122; other server software 124; aptitude management server software 126; a user computing system 130; user system hardware 132; other user system software 134; aptitude management user software 136; additional user computing systems 140; and other systems 150.

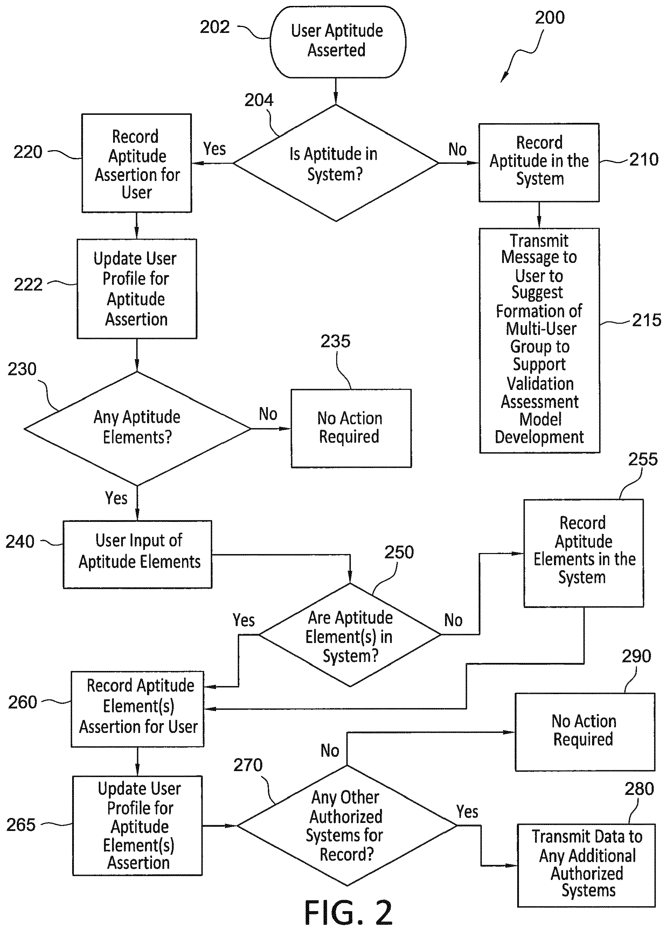

For reference, the embodiments detailed in Figs 2 through 10 are illustrative of select components of the embodiment of FIG. 1.

Users of the aptitude management system and method 100 utilize the aptitude management user software 136 as a component of the user computing system 130 or the additional user computing systems 140 to conduct activities based upon instructions contained in the aptitude management server software 126, including those illustrated in the embodiments described herein, which when executed by the server computing system 120, support the aptitude management functions of the system 100.

The other systems 150 may be any other system connected to the server computing system 120. Further detailed operation of the aptitude management system 100 will be provided below.

FIG. 2 illustrates a flow chart of a method for user aptitude assertion. The method 200 begins at step 202 where a user makes an assertion of aptitude through the user computer system and aptitude management user software, and the user assertion is transmitted to the server computer system and aptitude management server software via the network. The user may select from a set of previously defined aptitudes stored in the system, for example, from a list or a dropdown menu or may enter new aptitudes that may become part of the defined aptitudes stored in the system. Also, if the user enters an aptitude, the system may determine if that aptitude is the same as a previously defined aptitude just using a different term. This allows user entered aptitudes to be standardized so that consistent descriptions of aptitudes are used by all.

The method 200 then proceeds to step 204 where the method 200 determines if the asserted aptitude is in the system. For example, banking compliance management may already be recorded as an aptitude in the system, while government contracting compliance management may not be recorded in the system. If the asserted aptitude does not exist in the system, the method 200 proceeds to step 210 in which a record of the aptitude is created in the system, as well as for the aptitude assertion by the user. Then the method 200 proceeds to step 215 in which a message is transmitted to the user to suggest formation of a multi-user group to support validation model development. Multi-user groups will be further discussed below.

If the asserted aptitude (or its equivalent) exists in the system, the method 200 proceeds to step 220 in which a record of the aptitude assertion by the user is created in the system and then the method 200 proceeds to step 222 in which the user profile is updated for the aptitude assertion.

The method 200 then proceeds to step 230 where the method 200 asks the user if they would like to enter any elements of the aptitude. For instance, if the asserted aptitude is banking compliance management, elements could include consumer compliance, Bank Secrecy Act compliance, Community Reinvestment Act compliance, among other elements, while another aptitude may not have elements.

If the user response is that there are no aptitude elements to enter, then the method 200 proceeds to step 235, in which no action is required.

If the user response is that there are aptitude elements, then the method proceeds to step 240, in which the user inputs the aptitude elements into the system. The user may select from predefined user aptitudes, for example, from a list or dropdown menu.

The method 200 then proceeds to step 250 where the method 200 determines if asserted aptitude element(s) are in the system. If the asserted aptitude elements do not exist in the system, then the method proceeds to step 255, in which the aptitude elements are created and recorded in the system, and the method 200 records the aptitude elements for the user 260.

If the asserted aptitude elements exist in the system, the method proceeds to step 260, in which the aptitude elements are recorded in the system for the user and then the method proceeds to step 265 in which the user profile is updated for the aptitude element(s) assertion.

The method 200 then proceeds to step 270 where the method 200 assesses whether the user has configured its user profile to authorize transmission of the aptitude assertion and any aptitude elements to other systems, including, for example, another profile in another system or to other applications such as LinkedIn or Facebook.

If an authorized other system exists, then the method proceeds to step 280 where the aptitude assertion and any aptitude elements are transmitted to the additional authorized systems. If no authorized other system exists, then the method proceeds to step 290 where no further action is required.

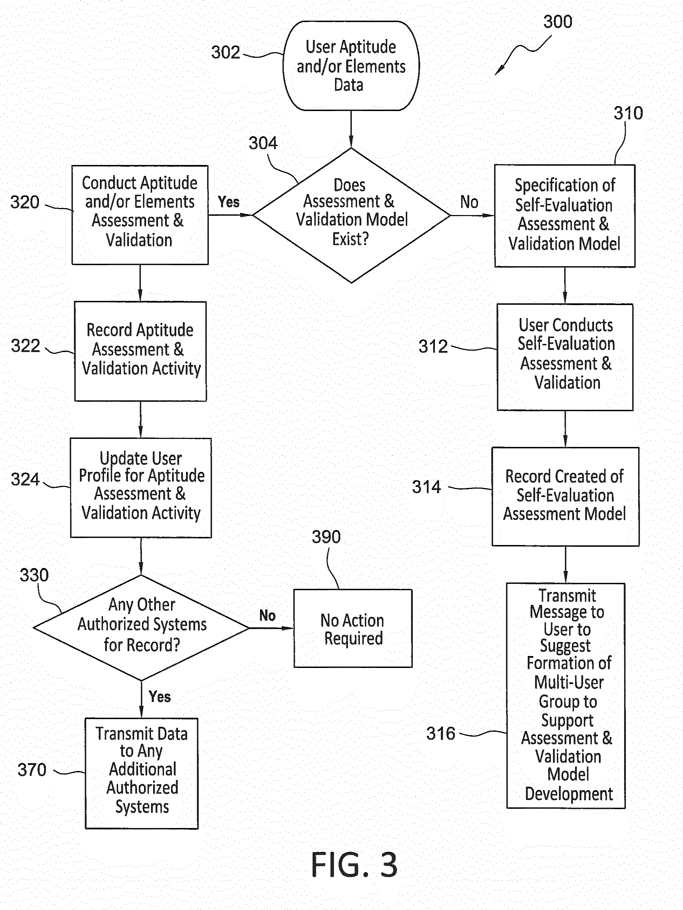

FIG. 3 illustrates a flow chart for a method of validating a user. The method 300 begins at step 302 when a user makes an assertion of aptitude and/or aptitude elements data. The method then proceeds to step 304 where the method determines if an assessment and validation model exists in the system. If no assessment and validation model exists in the system, the method 300 proceeds to step 310 in which the user specifies the self-evaluation assessment and validation model and then proceeds to step 312 in which the user conducts the self-evaluation assessment and validation. The user may be presented a tool to facilitate this self-assessment. For example, the user may add different aspects of an aptitude/element and then provide a rating of their proficiency of the aspect. This may be done using Likert scales.

The method then proceeds to step 314 in which a record is created in the aptitude management server software of the self-evaluation.

Then, the method proceeds to step 316 in which a message may be transmitted to the user by the aptitude management server software to suggest the formation of a multi-user group to support validation and assessment model development. This allows for the user to join with other users to develop an assessment and validation model for the asserted aptitude/element. The development of this assessment and validation model by a group of peers who may credibly develop such a model will help give greater weight to the user's aptitude. Further, the participation in the development of assessment and validation models helps to increase the reputation of the participant.

If an assessment and validation model exists in the system, the method 300 then proceeds to step 320 in which an assessment and validation of the user's assertion is conducted. This may be done by the user taking a survey, test, challenge, etc., that assesses and validates the user's aptitude assertion. This may be done, for example, by sending the user to a web site with an assessment and validation tool. This may be a part of the aptitude management system or a third-party site. In another embodiment, user(s) in a multi-user group are requested to conduct and do conduct an assessment and validation of the aptitude and/or aptitude elements using the existing model. An assessment by other users who are recognized by their reputation provides validity to the assessment of the user's aptitude that others (i.e., potential employers) may rely upon.

Then, the method proceeds to step 322 in which a record of validation activity of the aptitude and/or aptitude elements is recorded and then to step 324 in which the user profile is updated to indicate the assessment and validation of the aptitude and/or aptitude elements.

The method 300 then proceeds to step 330 where the method determines whether the user has configured its user profile to authorize transmission of the aptitude assertion and any aptitude elements to other systems, including, for example, another profile in another system and as discussed above with respect to step 270.

If an authorized other system is identified, then the method proceeds to step 370, and the aptitude assertion and any aptitude elements are transmitted to the additional authorized systems.

If no authorized other system is identified, then the method proceeds to step 390 where no action is required.

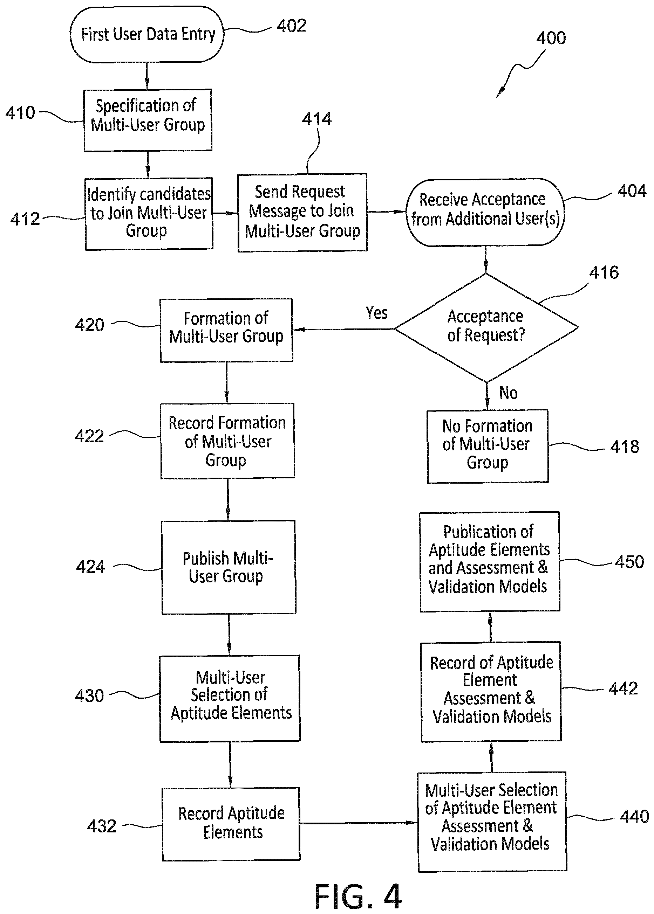

FIG. 4 illustrates a flow chart for a method of developing a multi-user aptitude assessment and validation model. The method 400 begins at step 402 when a user enters data to initiate a multi-user group specification at step 410 based upon the need for such a specification in the aptitude management system. Then, the method 400 continues at step 412 where the method 400 identifies candidates to join the multi-user group.

Then the method 400 continues at step 414 where the method 400 sends a message to the identified candidates requesting to join the multi-user group. Also, this message may made accessible to additional users via a public posting regarding the new multi-user group. The method 400 receives acceptance messages from those users willing to participate in the formation of a new multi-user group 404.

Next, the method 400 continues at step 416 where the method 400 determines if a sufficient number of users have accepted the request to join the multi-user group. Also, this determination may also determine if the users accepting the request are qualified to participate in the formation of the multi-user group.

If a sufficient number of users do not accept the request to form a new multi-user group, then no multi-user group is formed at step 418.

If a sufficient number of users accept the request to form a new multi-user group, then, at step 420, a multi-user group is formed, and then the formation of the multi-user group is recorded to the aptitude management system at step 422. Also, a notice of the formation of the new multi-user group may be published by the aptitude management system at step 424.

Then, the method 400 continues at step 430 with the users collaborating to select aptitude elements, and the selected aptitude elements may be recorded at step 432. Next, the method 400 continues at step 440 with the users collaborating to select and define the assessment and validation models for the selected aptitude and aptitude elements, and the aptitude management system then records of these assessment and validation models at step 442. Further, the aptitude management system publishes the assessment and validation models at step 450.

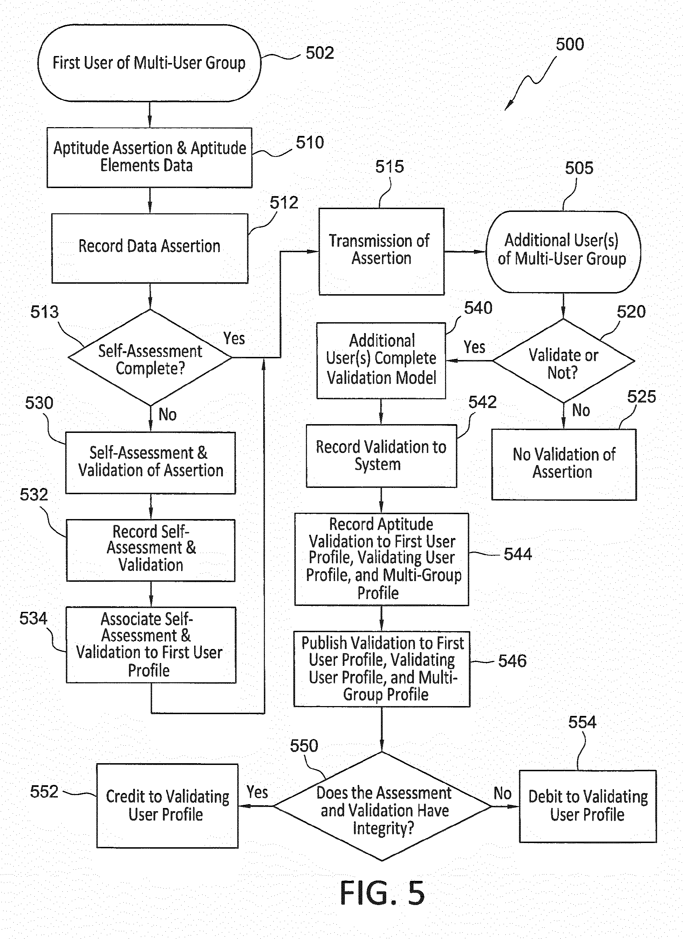

FIG. 5 illustrates a flow chart for a method of multi-mode user aptitude assessment and validation. The method 500 begins at step 502 when a user accesses the aptitude management system via the user software. Then the user enters, at step 510, aptitude or aptitude element data into the system via the user software as an assertion. Then, the method continues at step 512, where the aptitude management system records the asserted aptitude and aptitude element data into the system and as part of the user profile.

Then, the method 500 then determines if the user has completed a self-assessment 513. If the user has not completed a self-assessment, at step 530, the user conducts a self-assessment and validation of the asserted aptitudes and aptitude elements, which is then recorded in the aptitude management system at step 532. The self-assessment and validation is also associated with the user profile at step 534. The method then continues to step 515.

If the self-assessment is complete, then the method continues to step 515, where the aptitude management system transmits the aptitude and aptitude element data entered by the user to the other users of the multi-user group. The other users then determine if they want to assess and validate the aptitude of the user 505.

At step 520, the aptitude management determines if a sufficient number of other multi-user group members are willing to assess and validate the user or not.

If a sufficient number of other multi-group members are not willing to assess and validate the user, then no action is taken and no validation occurs at step 525.

If a sufficient number of other multi-group members are willing to assess and validate the user, then the aptitude management server system presents the model for aptitude and aptitude element assessment and validation to the willing multi-group members at step 540 and the willing multi-group members complete the assessment and validation of the user. When assessment and validation has occurred, a record of the validation is entered in the aptitude management system at 542. The aptitude management system then also records the multi-group assessment and validation to the first user profile, validating user profile, and multi-user group profile at 544. The aptitude management system next publishes multi-user assessment and validation of the user at 546.

Then, the method 500 continues at step 550, where the aptitude management system performs an integrity review. If the multi-group assessment and validation passes the integrity review, a credit is attributed to the validating user profile at step 552, which credit may be economic or non-economic. If the multi-group assessment and validation fails the integrity review, a debit is made to the validating user profile at step 554, which credit may be economic or non-economic. The credit provides an incentive for multi-group users to participate in user assessment and validation activities. In addition, such participation may improve the reputation of the reviewer. Also, the ability to debit a reviewer will reduce the possibility of fraud in the assessment and validation process.

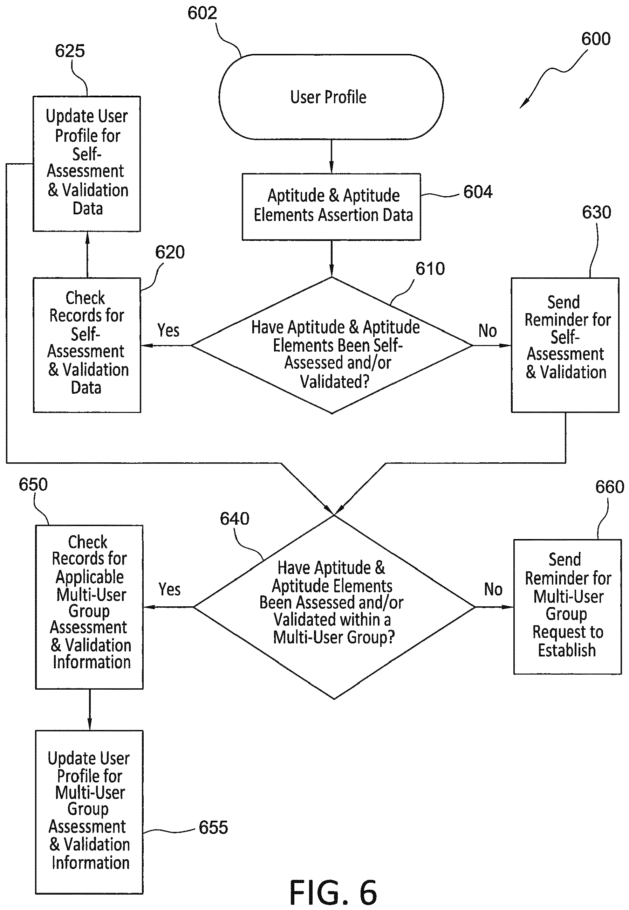

FIG. 6 illustrates a flow chart for a method of user aptitude attribution. The method 600 begins at step 602 when a user enters aptitude or aptitude element data into the aptitude management system via the user software.

Then, the method 600 proceeds to step 604 where the aptitude management server assesses the aptitude and aptitude element data entered by the user.

At step 610, the aptitude management system determines if the aptitude and aptitude element entered by the user have been self-assessed or validated.

If the user has performed a self-assessment and validation of their aptitude data, then the aptitude management system checks aptitude management system records for self-assessment and validation data in step 620. If such self-assessment and validation data is available, the aptitude management system updates the user profile with the self-assessment and validation data at step 625. The method then continues to step 640.

If the user has not performed a self-assessment and validation of their aptitude data, then the aptitude management system sends a reminder to the user that self-assessment and validation needs to occur at step 630.

Next, the aptitude management system determines if aptitude and aptitude elements have been assessed and/or validated within a multi-user group at step 640.

If a multi-group assessment and validation have been performed, then the aptitude management system checks aptitude management system records for multi-user group assessment and validation data in step 620. If such data is available, the aptitude management system updates the user profile for the multi-user group assessment and validation data at step 650.

If a multi-group assessment and validation has not been performed, then the aptitude management system sends a reminder to the user to establish a multi-user group for assessment and validation needs to occur via step 660 or to have the multi-user group conduct an assessment and validation of the user's aptitudes.

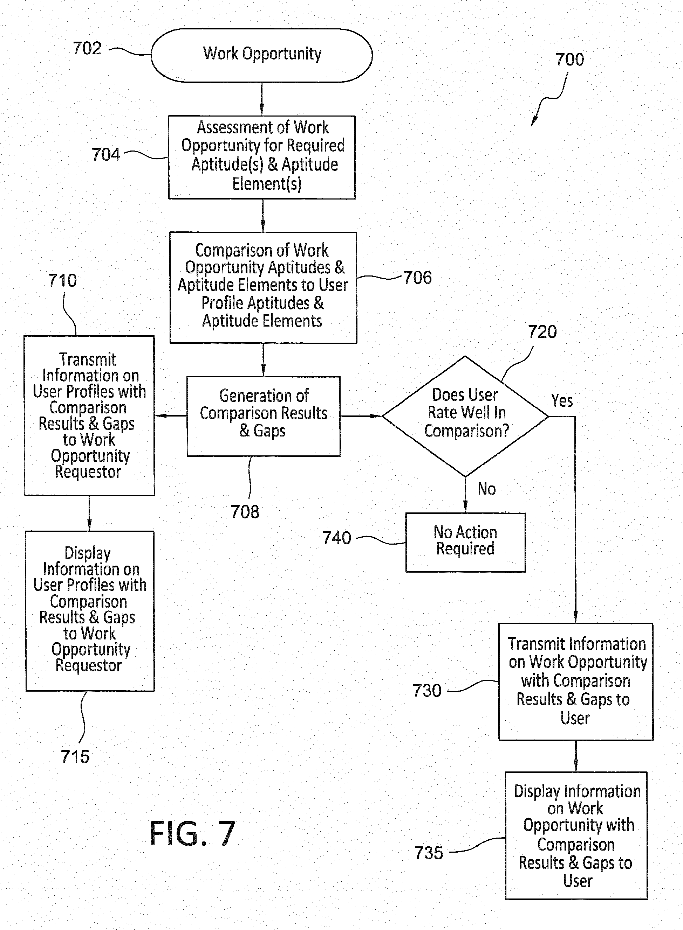

FIG. 7 illustrates a flow chart for a method of matching a work opportunity to a user. The method 700 begins at step 702 with an entry by a user of a work opportunity into the system via the user software. For example, a work opportunity could be an employment position, a consulting gig, or some other type of activity.

The method 700 then moves to step 704, where the aptitude management system assesses the work opportunity for required aptitude(s) and aptitude element(s), which may be specified directly by the user in provided data fields, parsed and determined by the system, or both. Next, the aptitude management system compares the resulting aptitude(s) and aptitude element(s) required for the work opportunity against the user profiles in the system to assess potential matches to the work opportunity and aptitude or aptitude element gaps.

Then in step 708, the aptitude management system generates comparison and gap results. At step 710, the aptitude management system transmits information from any relevant user profiles with comparison of aptitude and aptitude element results and gaps to the user that entered the work opportunity, and then, at step 715, the aptitude management system displays this information to the work opportunity entry user.

In parallel, at step 720, the aptitude management server system determines if a user that possesses aptitude(s) and aptitude element(s) in a user profile rates well in comparison to the work opportunity. If a given user rates well, then the method continues to step 730, in which the aptitude management server system transmits information on the work opportunity with comparison results and gaps to the user and then proceeds to display the same information at step 735.

If a given user does not rate well, then, the method continues to step 740, in which no action is required.

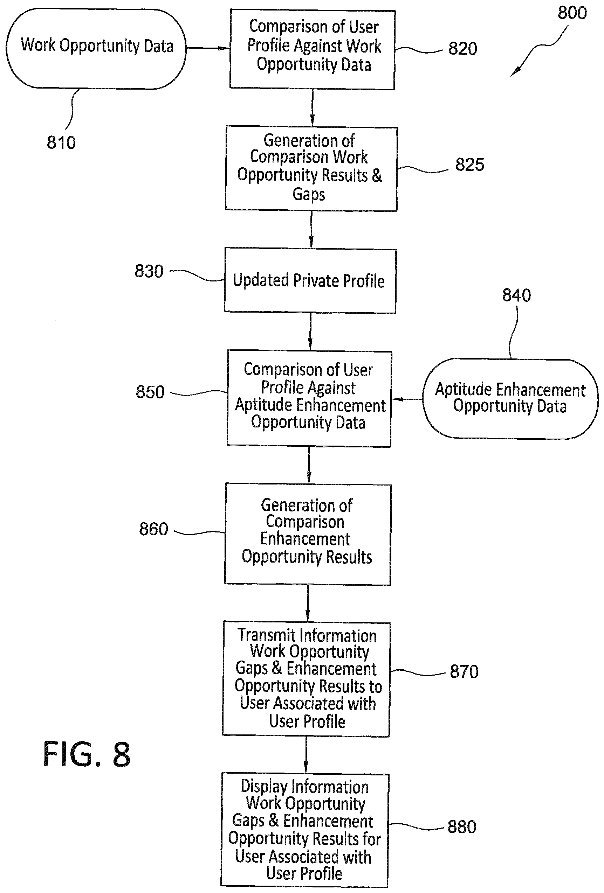

FIG. 8 illustrates a flow chart for a method of enhancing user aptitudes. The method 800 begins at step 810 where the aptitude management system receives work opportunity data. Next at step 820, the aptitude management server system conducts a comparison of the user profile and the work opportunity data.

The method 800 then proceeds to step 825 where the aptitude management server system generates a record of the work opportunity comparison results and gaps. The user's private profile may be updated using this generated comparison results and gaps at step 830. These generated comparison results and gaps may only be used by the aptitude management system and the user of the profile.

The method 800 then proceeds to step 850 where the aptitude management system conducts a comparison of the updated private profile to aptitude enhancement opportunity data 840. The aptitude management system generates a comparison of enhancement opportunity results at step 860. For example, enhancement opportunity data, in one embodiment, might include training courses, certification programs, and degree programs that support aptitude development or enhancement.

The method 800 then proceeds to step 870 where the aptitude management system transmits work opportunity gaps and enhancement opportunity results to the user associated with the updated user profile and then displays work opportunity gaps and enhancement opportunity results to the user associated with the updated user profile on the user computing system at step 880.

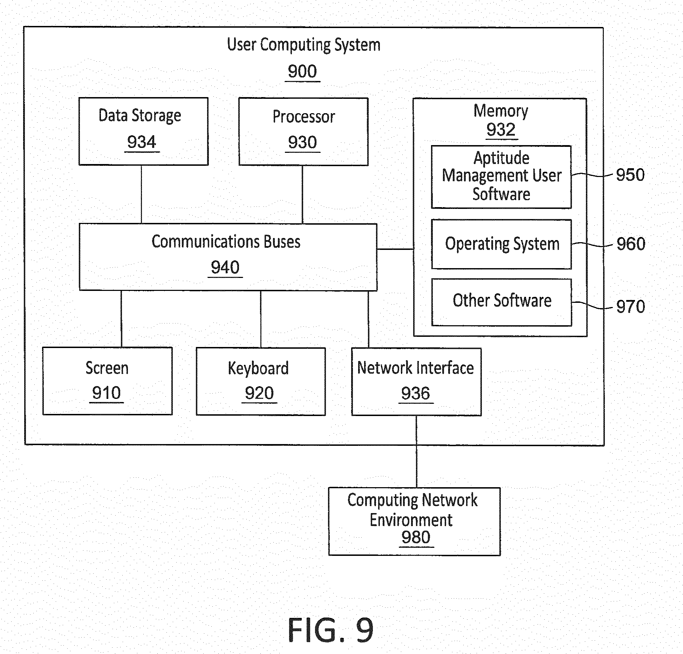

FIG. 9 illustrates an embodiment of a user computing system 900 for use in embodiments of the aptitude management system 900 and otherwise described herein, which could include, in one embodiment, mobile devices, tablets, laptop computers, or personal computers. Each user computing system 900 illustrated includes a screen 910, a keyboard 920, which may be external or available on the screen 910, a processor or microprocessor 930, memory 932, data storage 934, and a network interface 936. Communication between the processor 930, memory 932, storage 934, and the network interface 936 is accomplished by way of one or more communication buses 940. The network interface 936 would support connectivity to a computing network environment 980.

In this same embodiment, the user computing system 900 for use in the aptitude management system 100 includes user software for the aptitude management system 950 and may have stored thereon various other software applications 970, including an operating system 960.

It should be recognized that a user computing system 900 may have fewer components or more components than shown in FIG. 9. Moreover, the storage device 934 may also not be necessary for operation of the user computing system 900 as data may be stored in memory, for example. Data may also be stored remotely and accessed over a network, such as the Internet.

The memory 932 may, for example, include random access memory (RAM), dynamic RAM, or read only memory (ROM) (e.g., programmable ROM, erasable programmable ROM, or electronically erasable programmable ROM) and may store computer program instructions and information.

The processor 930 may be any desired processor or microprocessor, including a processor in a mobile device, tablet, laptop, or a personal computer.

The processor 930 may furthermore execute the program instructions and process the data stored in the memory 932. In one embodiment, the instructions are stored in memory 932 in a compressed or encrypted format. As used herein the phrase, "executed by a processor" is intended to encompass instructions stored in a compressed or encrypted format, as well as instructions that may be compiled or installed by an installer before being executed by the processor 930.

The storage device 934 may, for example, be non-volatile battery backed SRAM, a magnetic disk (e.g., hard drive), optical disk (e.g., CD-ROM) or any other device or signal that can store digital information. The network interface 936 permits communication between the user computing systems 900 and other components of the aptitude management system 100.

In one embodiment, user software for the aptitude management system 950 may be installed on the user computing systems 900 to support display, via the screen 910, of actions to be taken by and data available to the user of the user computing systems 900 from the aptitude management system 100, as described in FIG. 1.

In this same embodiment of the aptitude management system 100, the screen 910 supports actions to be taken by the user of the user computing systems 900 via the screen 910 or the keyboard 920.

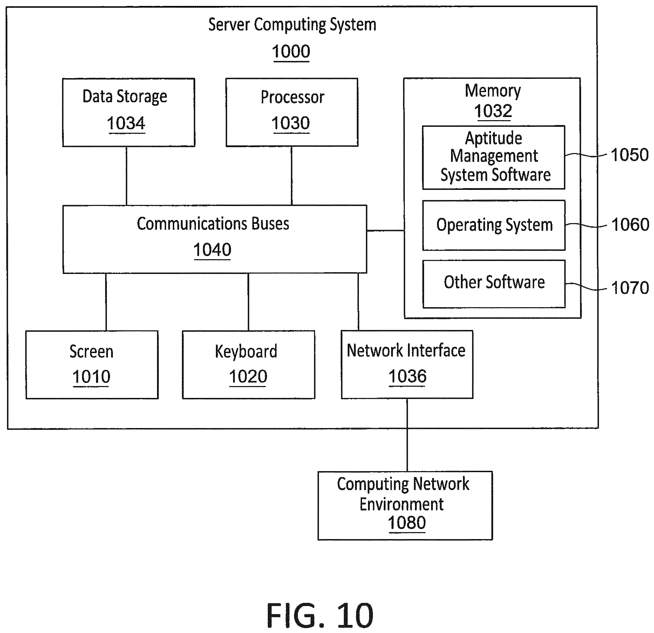

FIG. 10 illustrates an embodiment of a server computing system 1000 for use in embodiments of the aptitude management system 100 and otherwise described herein, which could include, in one embodiment, mobile devices, tablets, laptop computers, or personal computers. Each server computing system 1000 illustrated includes a screen 1010, a keyboard 1020, which may be external or available on the screen 1010, a processor or microprocessor 1030, memory 1032, data storage 1034, and a network interface 1036. Communication between the processor 1030, memory 1032, storage 1034, and the network interface 1036 is accomplished by way of one or more communication buses 1040. The network interface 1036 would support connectivity to a computing network environment 1080.

In this same embodiment, the user computing system 1000 for use in the aptitude management system 100 includes system software for the aptitude management system 1050 and may have stored thereon various other software applications 1070, including an operating system 1060.

It should be recognized that a server computing system 1000 may have fewer components or more components than shown in FIG. 10. Moreover, the storage device 1034 may also not be necessary for operation of the server computing system 1000 as data may be stored in memory, for example. Data may also be stored remotely and accessed over a network, such as the Internet.

The memory 1032 may, for example, include random access memory (RAM), dynamic RAM, or read only memory (ROM) (e.g., programmable ROM, erasable programmable ROM, or electronically erasable programmable ROM) and may store computer program instructions and information.

The processor 1030 may be any desired processor or microprocessor, including a processor in a mobile device, tablet, laptop, or a personal computer.

The processor 1030 may furthermore execute the program instructions and process the data stored in the memory 1032. In one embodiment, the instructions are stored in memory 1032 in a compressed or encrypted format. As used herein the phrase, "executed by a processor" is intended to encompass instructions stored in a compressed or encrypted format, as well as instructions that may be compiled or installed by an installer before being executed by the processor 1030.

The storage device 1034 may, for example, be non-volatile battery backed SRAM, a magnetic disk (e.g., hard drive), optical disk (e.g., CD-ROM) or any other device or signal that can store digital information. The network interface 1036 permits communication between the server computing systems 1000 and other components of the aptitude management system 100.

In one embodiment, software for the aptitude management system 1050 may be installed on the user computing systems 1000 to support display, via the screen 1010, of actions to be taken by and data available to the administrator(s) of the server computing systems 1000 from the aptitude management system 100, as described in FIG. 1.

In this same embodiment of the aptitude management system 100, the screen 1010 supports actions to be taken by the administrator of the server computing systems 1000 via the screen 1010 or the keyboard 1020.

In another embodiment, the functions of the screen 1010 may be accomplished through a separate computing system.

In another embodiment, the server computing system 1000 may be located within a cloud computing environment and feature multiple server computing systems 1000.

The various embodiments described herein solve the technological problem of rigorously assessing and validating user aptitudes. Further, these validated user aptitudes may be compared to various work opportunities and such comparisons allows for those hiring for the work opportunities to find candidate users that have the aptitudes to carry out the work opportunity. Further, these comparisons of user aptitudes to work opportunities may be used to identify gaps in the user's aptitudes and these may be brought to the user's attention as well as identifying training opportunities for the user. Further, the formation of multi-user groups allows for communities of experts to form that assess and validate the aptitudes of users. These multi-user groups may provide incentives to its users to participate in assessment and validation activities. Also, these groups may develop assessment and validation models for various aptitudes. Each of these features of the aptitude management system result in a technological solution to providing user aptitude validation.

The embodiments described herein utilize crowdsourcing and/or social networks to rigorously assess and validate user aptitudes. As a result, peer networks may be created to carry out the assessment and validation of user aptitudes that may be trusted by users with work opportunities.

It should be apparent from the foregoing description that various exemplary embodiments of the invention may be implemented in hardware. Furthermore, various exemplary embodiments may be implemented as instructions stored on a non-transitory machine-readable storage medium, such as a volatile or non-volatile memory, which may be read and executed by at least one processor to perform the operations described in detail herein. A non-transitory machine-readable storage medium may include any mechanism for storing information in a form readable by a machine, such as a personal or laptop computer, a server, or other computing device. Thus, a non-transitory machine-readable storage medium may include read-only memory (ROM), random-access memory (RAM), magnetic disk storage media, optical storage media, flash-memory devices, and similar storage media and excludes transitory signals.

It should be appreciated by those skilled in the art that any blocks and block diagrams herein represent conceptual views of illustrative circuitry embodying the principles of the invention. Implementation of particular blocks can vary while they can be implemented in the hardware or software domain without limiting the scope of the invention. Similarly, it will be appreciated that any flow charts, flow diagrams, state transition diagrams, pseudo code, and the like represent various processes which may be substantially represented in machine readable media and so executed by a computer or processor, whether or not such computer or processor is explicitly shown.

Accordingly, it is to be understood that the above description is intended to be illustrative and not restrictive. Many embodiments and applications other than the examples provided would be apparent upon reading the above description. The scope should be determined, not with reference to the above description or Abstract below, but should instead be determined with reference to the appended claims, along with the full scope of equivalents to which such claims are entitled. It is anticipated and intended that future developments will occur in the technologies discussed herein, and that the disclosed systems and methods will be incorporated into such future embodiments. In sum, it should be understood that the application is capable of modification and variation.

The benefits, advantages, solutions to problems, and any element(s) that may cause any benefit, advantage, or solution to occur or become more pronounced are not to be construed as a critical, required, or essential features or elements of any or all the claims. The invention is defined solely by the appended claims including any amendments made during the pendency of this application and all equivalents of those claims as issued.

All terms used in the claims are intended to be given their broadest reasonable constructions and their ordinary meanings as understood by those knowledgeable in the technologies described herein unless an explicit indication to the contrary in made herein. In particular, use of the singular articles such as "a," "the," "said," etc. should be read to recite one or more of the indicated elements unless a claim recites an explicit limitation to the contrary.

The Abstract of the Disclosure is provided to allow the reader to quickly ascertain the nature of the technical disclosure. It is submitted with the understanding that it will not be used to interpret or limit the scope or meaning of the claims. In addition, in the foregoing Detailed Description, it can be seen that various features are grouped together in various embodiments for the purpose of streamlining the disclosure. This method of disclosure is not to be interpreted as reflecting an intention that the claimed embodiments require more features than are expressly recited in each claim. Rather, as the following claims reflect, inventive subject matter lies in less than all features of a single disclosed embodiment. Thus, the following claims are hereby incorporated into the Detailed Description, with each claim standing on its own as a separately claimed subject matter.

## Claims

1. An aptitude management system for assessing and validating an aptitude assertion by a user, the system comprising processor apparatus configured to:
receive a request from a user to establish a multi-user aptitude assessment and validation group;
identify candidates to join the multi-user aptitude assessment and validation group;
transmit a message to identified candidates with an invitation to join a multi-user aptitude assessment and validation group;
create the multi-user aptitude assessment and validation group based upon a first minimum number of candidates accepting the invitation to join;
generate an aptitude assessment and validation model based upon suggestions from members of the multi-user aptitude assessment and validation group; and
publish the multi-user aptitude assessment and validation model.

2. The aptitude management system of claim 1, wherein the processor apparatus is further configured to:
receive aptitude assertion data from a user;
transmit a request to assess and validate the aptitude assertion data from the user to members of the multi-user aptitude assessment and validation group; and
assess and validate the aptitude assertion data from the user by receiving assessments and validations from a second minimum number of members of the multi-user aptitude assessment and validation group.

3. The aptitude management system of claim 2, wherein the processor apparatus is further configured to:
record the aptitude assessment and validation to a user profile, validating members of the multi-user assessment and validation group profile, and the multi-user assessment and validation group profile.

4. The aptitude management system of claim 2 or 3, wherein the processor apparatus is further configured to:
determine the integrity of the multi-group assessment and validation of the user aptitude data.

5. The aptitude management system of claim 4, wherein the processor apparatus is further configured to:
provide a credit to a member of the multi-user assessment and validation group profile when the multi-group assessment and validation of the user aptitude data has integrity; and
provide a debit to a member of the multi-user assessment and validation group profile when the multi-group assessment and validation of the user aptitude data does not have integrity.

6. The aptitude management system of any of claims 2 to 5, wherein the processor apparatus is further configured to:
receive aptitude self-assessment data from the user.

7. The aptitude management system of any of claims 2 to 6, wherein the processor apparatus is further configured to:
transmit the aptitude assessment and validation to an authorized system.

8. The aptitude management system of any of claims 1 to 7, wherein the processor apparatus is further configured to:
receive aptitude assertion data from a user;
determine whether the user has completed a self-assessment; and
transmit a request to the user to complete the self-assessment when the self-assessment is not complete.

9. The aptitude management system of claim 8, wherein the processor apparatus is further configured to:
receive self-assessment request from a user; and
provide the user a self-assessment tool for the user to perform a self-assessment.

10. The aptitude management system of any of claims 1 to 9, wherein the processor apparatus is further configured to:
receive aptitude assertion data from a user;
determine whether the user's aptitudes have been assessed and validated by the multi-user aptitude assessment and validation group; and
transmit a request to the multi-user aptitude assessment and validation group to perform a multi-user aptitude assessment and validation of the user's aptitudes that have not been assessed and validated by the multi-user aptitude assessment and validation group.

11. The aptitude management system of any of claims 1 to 10, wherein the processor apparatus is further configured to:
receive a work opportunity from another user of the aptitude management system;
extract required aptitude information from the work opportunity;
generate comparison data by comparing the required aptitude information with the aptitudes in a profile of the user; and
transmit the comparison data to the other user.

12. The aptitude management system of any of claims 1 to 11, wherein the processor apparatus is further configured to:
receive a work opportunity from another user of the aptitude management system;
extract required aptitude information from the work opportunity;
generate comparison data by comparing the required aptitude information with the aptitudes in a profile of the user; and
transmit the comparison data to the user.

13. The aptitude management system of claim 11 or 12, wherein the comparison data includes gap data indicating required aptitudes not included in the user's profile.

14. The aptitude management system of claim 13 wherein the processor apparatus is further configured to:
compare the gap data to aptitude enhancement opportunity data; and
generate aptitude enhancement opportunities for the user; and
transmit to the user the enhancement opportunities for the user.

15. The aptitude management system of any of claims 1 to 14, wherein the processor apparatus is further configured to:
compare aptitudes in a user's profile against the aptitudes in a plurality of work opportunities;
generate gap data indicating work opportunity aptitudes not included in the user's profile;
compare the gap data to aptitude enhancement opportunity data;
generate aptitude enhancement opportunities for the user; and
transmit the gap data and enhancement opportunities for the user to the user.

16. A method for assessing and validating an aptitude assertion by a user by a processor apparatus, the method comprising:
receiving a request from a user to establish a multi-user aptitude assessment and validation group;
identifying candidates to join the multi-user aptitude assessment and validation group;
transmitting a message to identified candidates with an invitation to join a multi-user aptitude assessment and validation group;
creating the multi-user aptitude assessment and validation group based upon a first minimum number of candidates accepting the invitation to join;
generating an aptitude assessment and validation model based upon suggestions from members of the multi-user aptitude assessment and validation group; and
publishing the multi-user aptitude assessment and validation model.

17. A computer program comprising program code means adapted to perform the steps of claim 16 when the program is run on processor apparatus.
